# EUROPEAN PATENT APPLICATION

(11) **EP 1 403 081 A2**
(43) Date of publication of application: **31.03.2004**
(21) Application number: 03020206.3
(22) Date of filing: 05.09.2003
(51) Int. Cl.: B41J 11/48

(54) **Printing system, controller and display method**

(30) Priority: 24.09.2002 JP 2002276784
(71) Applicant: Dainippon Screen Mfg. Co., Ltd., Kamikyo-ku, Kyoto (JP)
(72) Inventor: Toyofuku, Hideo, Dainippon Screen Mfg.Co.,Ltd., Horikawa-dori Kamikyo-ku Kyoto 602-8585 (JP); Okita, Satoshi, Dainippon Screen Mfg.Co.,Ltd., Horikawa-dori Kamikyo-ku Kyoto 602-8585 (JP)
(74) Representative: Kilian, Helmut, Dr.

(57) **Abstract**

In a printing system, a controller defines identification information for identifying a plurality of paper feed cassettes provided in a printing machine for each of the paper feed cassettes. When an operator specifies a paper feed cassette for feeding a sheet for printing of an image represented by print data, the controller stores a correspondence between the print data and the specified paper feed cassette. Based on the correspondence, the controller combines the identification information assigned to the paper feed cassette corresponding to the print data with the image represented by the print data to create a preview image, and then displays the preview image. Prior to the execution of the printing, the operator can thereby easily recognize which paper feed cassette stores the sheet on which the image represented by the print data is to be printed.

## Description

### BACKGROUND OF THE INVENTION

### Field of the Invention

The present invention relates to a printing system including a controller for providing print data to a printing machine, and the printing machine for printing on a sheet an image represented by the print data provided from the controller. More particularly, the invention relates to a printing system which provides a preview of an image prior to printing of the image on a sheet.

### Description of the Background Art

Software applications such as word processing and spreadsheet software applications have the capability of displaying a preview of an image represented by electronically generated print data so that an operator views the preview of the image to determine, in advance, whether or not the print data is to be printed properly.

Such a preview capability is also used in a printing system including a digital printing machine and a controller. The digital printing machine rasterizes page data described in a page description language to directly print an image represented by the resultant print data on a sheet. Preview display in a printing system is generally utilized in such a manner that an operator views, on a display section of the controller, a preview of the image represented by the print data generated by the rasterization process to determine whether or not the image is proper. The operator for the digital printing machine performs printing after recognizing the preview of the image, thereby to prevent printing error due to erroneous settings in the rasterization process.

Sheets to be used in the process of producing prints (or printed matter) are not the same in size and material, but are of a variety of types. Some type of digital printing machine has a plurality of paper feed sections for storing respectively different types of sheets. Such a digital printing machine can print on sheets of a desired type by previously specifying a paper feed section which stores the desired sheets without the need to replace the paper feed sections each time sheets to be used are changed.

To produce a book, for example, having front and back covers made of coated paper and a main body made of plain paper, the digital printing machine controls the feed of paper from the paper feed sections so as to print images for the front and back covers on the coated paper and images for the main body on the plain paper. This achieves printing for production of the desired book. Therefore, the controller for the digital printing machine effects control to bring the print data and the sheets to be fed into proper correspondence with each other.

Conventionally, the digital printing machine displays a so-called preview image in advance so that the operator checks whether or not an image represented by print data is proper and whether or not the image is to be printed in a desired position on a sheet.

However, the conventional preview has been disadvantageous in that the digital printing machine having the plurality of paper feed sections is incapable of allowing the operator to identify a sheet on which an image represented by print data is to be printed. In other words, the printing machine which uses different types of sheets for appropriate purposes is incapable of allowing the operator to check in advance whether or not the print data and the sheet to be used are brought into proper correspondence with each other.

There has been another problem regarding a slip sheet (or an interleaf) to be inserted between printed sheets for distinction between the printed sheets. Specifically, it is impossible for the operator to easily check which sheet is to be used as the slip sheet. Since the preview based on the print data generally contains no information about slip sheets, it is impossible for the operator to check in advance whether a desired slip sheet is to be inserted in a proper position between the printed sheets.

### SUMMARY OF THE INVENTION

The present invention is intended for a printing system including a controller for providing print data to a printing machine, and the printing machine for printing on a sheet an image represented by the print data provided from the controller. More particularly, the invention is intended for a technique for providing a preview of an image prior to printing of the image on a sheet.

According to the present invention, the printing system comprises: (a) a printing machine having a plurality of paper feed sections, the printing machine using a sheet stored in any one of the plurality of paper feed sections; and (b) a controller for providing print data to the printing machine, the controller including (b-1) an information defining element for defining identification information for identifying the plurality of paper feed sections, (b-2) a paper feed section specifying element for specifying one of the plurality of paper feed sections for feeding the sheet for printing of an image represented by the print data on the sheet, (b-3) an image creating element for creating a preview image, based on the image represented by the print data, and the identification information defined by the information defining element for the paper feed section specified by the paper feed section specifying element, and (b-4) a display element for displaying the preview image created by the image creating element.

This allows an operator to previously recognize the sheet on which the print data is to be printed.

Preferably, the controller further includes (b-5) a position specifying element for specifying a position in which a slip sheet is to be inserted between printed sheets, and (b-6) a slip sheet feed section specifying element for specifying one of the plurality of paper feed sections for feeding a sheet to be used as the slip sheet; and the image creating element creates the preview image, based on the position in which the slip sheet is to be inserted which is specified by the position specifying element, and the identification information defined by the information defining element for the paper feed section specified by the slip sheet feed section specifying element.

This allows the operator to previously recognize the slip sheet insertion position and the sheet for use as the slip sheet, when the slip sheet is to be used.

The present invention is also intended for a method of displaying an image represented by print data. The method comprises the steps of: (a) defining identification information for identifying a plurality of paper feed sections provided in a printing machine; (b) specifying one of the plurality of paper feed sections for feeding a sheet for printing of the image represented by the print data on the sheet; (c) creating a preview image, based on the image represented by the print data, and the identification information defined in the step (a) for the paper feed section specified in the step (b); and (d) displaying the preview image created in the step (c).

This allows the operator to previously recognize the sheet on which the print data is to be printed.

It is therefore an object of the present invention to allow an operator to recognize, prior to printing, whether or not a desired image is to be reliably printed on a desired sheet.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram of a printing system according to a preferred embodiment of the present invention;
Fig. 2 is a flowchart for illustrating the operation of the printing system;
Fig. 3A shows a definition menu;
Fig. 3B shows an example of identification information;
Fig. 4A shows a specification menu;
Fig. 4B shows an example of specification information;
Fig. 5A shows another specification menu;
Fig. 5B shows an example of position information;
Fig. 6A shows still another specification menu;
Fig. 6B shows an example of specification information;
Fig. 7 is a flowchart showing the details of a preview display process of a controller;
Fig. 8A shows another definition menu;
Fig. 8B shows an example of definition information;
Fig. 9 shows an example of a correspondence table;
Fig. 10 shows an example of a preview image displayed in the form of a single page;
Fig. 11 shows an example of another preview image displayed in the form of a single page;
Fig. 12 shows an example of still another preview image displayed in the form of a single page;
Fig. 13 shows an example of preview images displayed in list form;
Fig. 14A shows an example of the correspondence table when information about the type of sheets is used as the identification information; and
Fig. 14B shows an example of preview images displayed in list form, based on the correspondence table shown in Fig. 14A.

### DESCRIPTION OF THE PREFERRED EMBODIMENTS

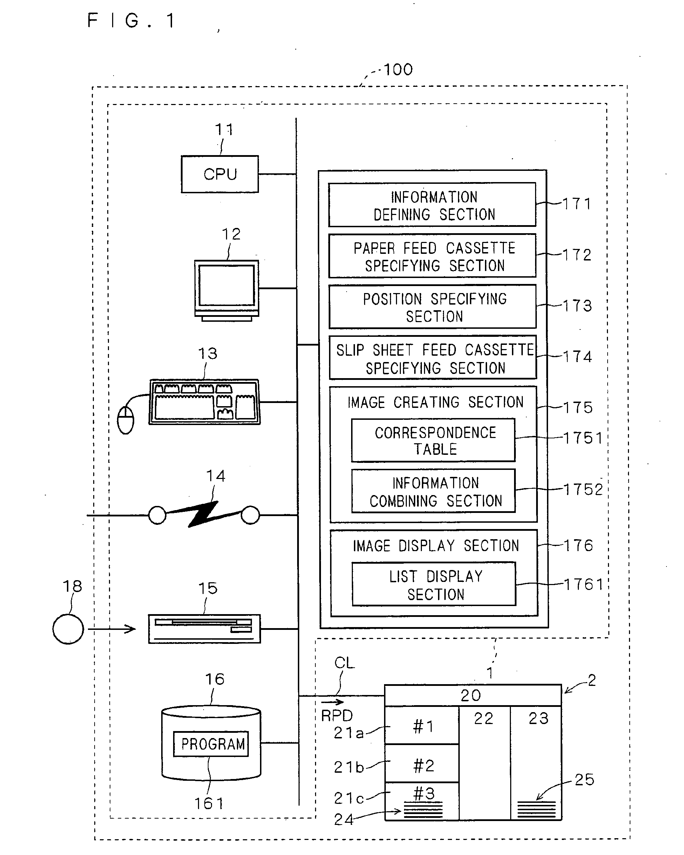

Fig. 1 is a diagram of a printing system 100 according to the present invention. The printing system 100 comprises a controller 1, a printing machine 2, and a communication line CL.

The controller 1 is a device corresponding to a personal computer in common use, and includes a CPU 11, a display section 12, an input section 13, a network I/F (interface) 14, a media drive 15, a storage section 16, and a memory 17.

The CPU 11 controls the entire controller 1. In particular, the CPU 11 executes in the memory 17 a program recorded on a media disk 18 to implement functions of the controller 1.

The display section 12 displays various pieces of information required to display a preview image in the controller 1. The input section 13 includes a mouse and a keyboard, and is used for operator's entry of commands into the controller 1.

The network I/F 14 is intended to establish a connection between the controller 1 and a network not shown. Through the network I/F 14, the controller 1 can receive page data PD or print data RPD for printing in the printing machine 2 from a terminal (not shown) connected to the network. Additionally, a program for implementing the functions. of the controller 1 may be downloaded from a server not shown through the network I/F 14 to the controller 1. When the printing machine 2 is connected via a network to the controller 1, the controller 1 sends the print data RPD or a control signal ACD for slip sheet insertion through the network I/F 14 to the printing machine 2.

The media drive 15 is used to read a program 161 recorded on the media disk 18. The program 161 read by the media drive 15 is executed by the CPU 11 to implement the functions of the controller 1 as described above. The storage section 16 stores therein the program 161 read by the media drive 15. The storage section 16 also stores therein various data including the page data PD and the print data RPD.

The communication line CL establishes a connection between the controller 1 and the printing machine 2 for communication therebetween. The controller 1 sends the input data RPD to the printing machine 2. The controller 1 also sends the control signal ACD for slip sheet insertion through the communication line CL to the printing machine 2.

The printing machine 2 has the function of printing the print data RPD sent from the controller 1 directly on a sheet 24. Therefore, the printing machine 2 comprises a control section 20, paper feed cassettes 21, a printing section 22, and a paper stack section 23.

The control section 20 controls the entire printing machine 2. The control section 20 receives the print data RPD sent from the controller 1 to selectively feed a sheet 24 for printing thereon an image (also referred to hereinafter as an original image) represented by the print data RPD from a paper feed cassette 21 to the printing section 22. The control section 20 also converts the received print data RPD into a format printable by the printing section 22 to supply the converted data to the printing section 22. When the control section 20 receives the control signal ACD, the control section 20 selectively feeds a sheet 24 specified as a slip sheet from a paper feed cassette 21 to the printing section 22, but does not provide the data of the printable format to the printing section 22. This allows the sheet 24 specified as the slip sheet to be discharged to the paper stack section 23 without printing on the sheet 24.

The printing machine 2 has the plurality of paper feed cassettes 21. In the printing machine 2 according to this preferred embodiment, the plurality of paper feed cassettes 21 are three paper feed cassettes 21a, 21b and 21 c. However, the number of paper feed cassettes 21 is not limited to three. Although sheets 24 are shown in Fig. 1 as stored only in the paper feed cassette 21c, the paper feed cassettes 21a and 21b also store different types of sheets 24, and the printing machine 2 according to this preferred embodiment can use three types of sheets 24. In response to a control signal from the control section 20, each of the paper feed cassettes 21 feeds a sheet 24 stored therein through a conveyor section not shown to the printing section 22.

The printing section 22 prints on the sheet 24 the original image represented by the print data RPD provided from the control section 20. Techniques used herein for printing in the printing section 22 include plateless printing such as electrophotographic printing, ink jet printing and thermal sublimation printing, or conventional printing employing plates. The printing section 22 does not print on a sheet 24 fed as the slip sheet.

The paper stack section 23 collects sheets 24 printed by the printing section 22 therein, and also collects sheets 24 discharged as slip sheets which are not printed. As a result, the sheets 24 collected in the paper stack section 23 are treated as printed sheets 25.

The memory 17 is a work area in which the CPU 11 executes the program 161 stored in the storage section 16. As a result of the execution of the program 161 by the CPU 11, the functions of an information defining section 171, a paper feed cassette specifying section 172, a position specifying section 173, a slip sheet feed cassette specifying section 174, an image creating section 175 and an image display section 176 are implemented in the memory 17.

For each of the paper feed cassettes 21 provided in the printing machine 2, the information defining section 171 defines identification information CC for individual identification of the paper feed cassettes 21. The defined identification information CC is used for discrimination between the paper feed cassettes 21a, 21b and 21c in a process to be described later. In this preferred embodiment, information regarding "color" is defined for each of the paper feed cassettes 21a, 21b and 21c and used as the identification information CC. However, the name of each paper feed cassette 21, a cassette number assigned to each paper feed cassette 21, the type of sheets 24 stored in each paper feed cassette 21, and the like may be used as the identification information CC. In other words, the identification information CC may be any information which allows an operator to easily identify the paper feed cassettes 21a, 21b and 21c.

The paper feed cassette specifying section 172 specifies a paper feed cassette 21 for feeding a sheet 24 on which the original image represented by the print data RPD is to be printed among the plurality of paper feed cassettes 21a, 21b and 21c. Information indicating the paper feed cassette 21 specified by the paper feed cassette specifying section 172 is stored as specification information CJ in a correspondence table 1751 to be described later. In the printing machine 2 according to this preferred embodiment, only sheets 24 of a single type are stored in any one of the paper feed cassettes 21. Since there is a one-to-one correspondence between the paper feed cassettes 21 and the types of sheets 24, specifying one of the paper feed cassettes 21 is equivalent to specifying one of the types of sheets 24. Thus, when the paper feed cassette specifying section 172 specifies a paper feed cassette 21 corresponding to the print data RPD, a sheet 24 stored in the specified paper feed cassette 21 is fed to the printing section 22 and printed in the process of printing the original image represented by the print data RPD.

The position specifying section 173 specifies a position in which a slip sheet is to be inserted between the printed sheets 25 in the process of producing the printed sheets 25. The slip sheet insertion position specified by the position specifying section 173 is stored as position information AI in the correspondence table 1751. The slip sheet is used for distinction between the sheets 24 printed and collected in the paper stack section 23, but may be used to prevent undried ink from transferring to the back surfaces of other sheets 24. The slip sheet may be used for any purpose. The sheet 24 for use as the slip sheet is preferably different, for example, in color, size or material from the sheet 24 to be printed. In general, printing is not performed on the slip sheet.

The slip sheet feed cassette specifying section 174 specifies a paper feed cassette 21 for feeding the sheet 24 for use as the slip sheet among the plurality of paper feed cassettes 21a, 21b and 21c. Information about the paper feed cassette 21 specified by the slip sheet feed cassette specifying section 174 is stored as specification information AJ in the correspondence table 1751.

The image creating section 175 creates a preview image PV based on the original image represented by the print data RPD. The image creating section 175 includes the correspondence table 1751 and an information combining section 1752.

The correspondence table 1751 stores the specification information CJ, and is a table for storing a correspondence between the print data RPD and the paper feed cassette 21 specified by the paper feed cassette specifying section 172. The correspondence table 1751 also stores a correspondence between the print data RPD and the paper feed cassette 21 specified by the slip sheet feed cassette specifying section 174 although the print data RPD is absent when printing is not performed on the slip sheet. Additionally, the correspondence table 1751 stores the position information AI specified by the position specifying section 173 and the specification information AJ in association with each other.

The information combining section 1752 combines the preview image PV created by the image creating section 175 and the identification information CC defined by the information defining section 171 together, based on the correspondence between the print data RPD and the paper feed cassette 21 which is stored in the correspondence table 1751, to create a preview image CPV. Specifically, the information combining section 1752 references the correspondence table 1751 to specify the identification information CC corresponding to the preview image PV, and then creates an image combination of the specified identification information CC and the preview image PV to provide the preview image CPV. The identification information CC corresponding to the preview image PV refers to the identification information CC indicating the paper feed cassette 21 specified by the paper feed cassette specifying section 172 for the print data RPD from which the preview image PV originates.

The information combining section 1752 combines the corresponding identification information CC with any one of the "background," "periphery" or "pattern" of the preview image PV. In this preferred embodiment, "color" is defined as the identification information CC by the information defining section 171, as discussed above. When the identification information CC is combined with the "background," the background of the preview image PV has the "color" defined as the corresponding identification information CC. Displaying the preview image CPV thus created on the display section 12 allows the operator to easily identify which paper feed cassette 21 is to be used during the printing of the original image represented in the preview image CPV, based on the "color" of the background being used. Since the type of sheets 24 stored in the paper feed cassette 21 is specified, the operator can identify the type of sheets 24 to be used by identifying the paper feed cassette 21 to be used. When the identification information CC is combined with the "periphery," the peripheral portion of the preview image PV has the "color" defined as the corresponding identification information CC. When the identification information CC is combined with the "pattern," the pattern of the preview image PV has the "color" defined as the corresponding identification information CC. When the cassette number or the name of the paper feed cassette 21 is defined as the identification information CC, the information combining section 1752 creates the preview image CPV which uses the cassette number or the name of the paper feed cassette as the background, periphery or pattern of the preview image PV.

The information combining section 1752 creates the preview image CPV also based on the correspondence between the position information AI and the paper feed cassette 21 in the correspondence table 1751. For the paper feed cassette 21 specified by the slip sheet feed cassette specifying section 174, the information combining section 1752 creates the preview image CPV with only the identification information CC displayed, because of the absence of the print data RPD. The position information AI is associated with the created preview image CPV.

The image display section 176 displays a preview window PW on the display section 12, and displays the preview image CPV created by the image creating section 175 within the preview window PW. The image display section 176 includes a list display section 1761. If a plurality of preview images CPV are created by the image creating section 175 (the information combining section 1752), the list display section 1761 displays the plurality of preview images CPV on a reduced scale in list form within the preview window PW. In this process, the preview images CPV for the print data RPD are listed in the order of printing for production of the printed sheets 25, with the preview image CPV for the slip sheet inserted in a predetermined position in accordance with the position information AI.

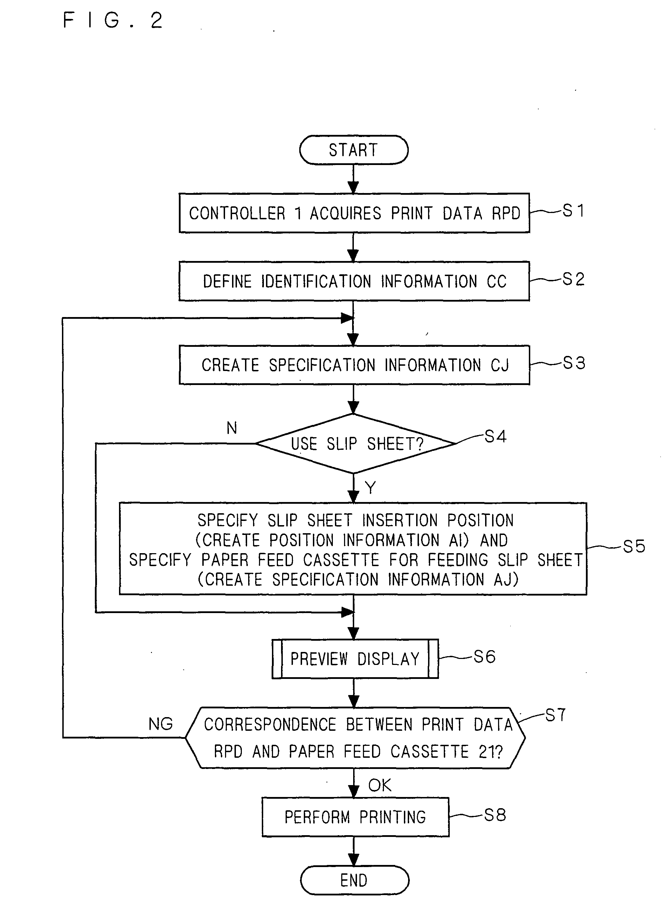

Fig. 2 is a flowchart for illustrating the operation of the printing system 100. The controller 1 stores the print data RPD in the storage section 16 in Step S1. A rasterization processor (not shown) included in the printing system 100 rasterizes the page data PD to generate the print data RPD. The page data PD is generated in a page description language at a terminal (not shown), and is transmitted through the network I/F 14 to the printing system 100. Alternatively, the print data RPD may be generated directly at the terminal and transmitted through the network I/F 14 to the printing system 100. Otherwise, the print data RPD generated at a terminal unconnected to the network may be stored in the media disk 18 which in turn is read by the media drive 15 to acquire the print data RPD.

In Step S2, the information defining section 171 defines the identification information CC. The operator manipulates the input section 13 of the controller 1 to do input relating to the definition of the identification information CC in the information defining section 171.

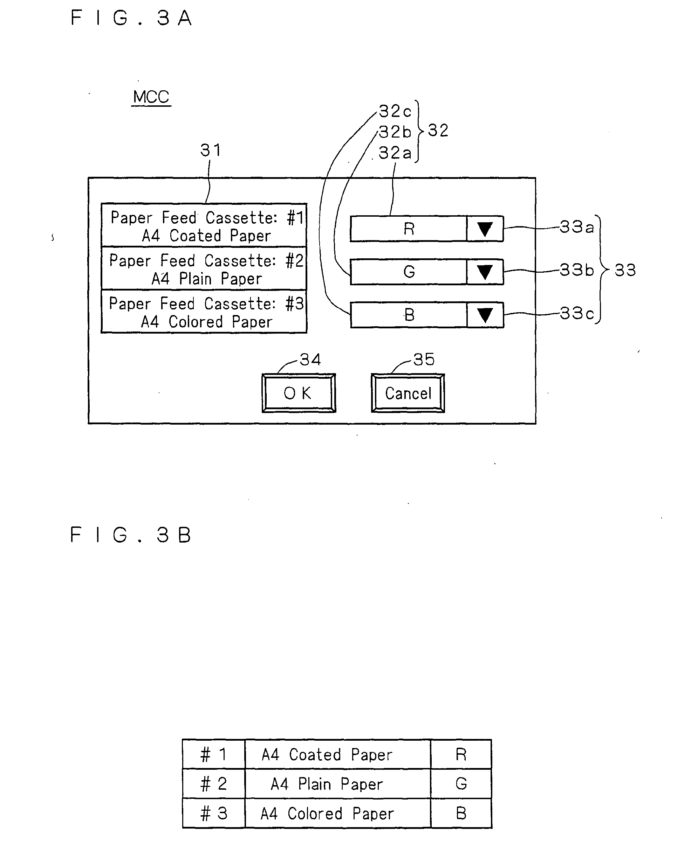

Fig. 3A shows a definition menu MCC. The definition menu MCC is displayed on the display section 12 by the information defining section 171 for definition of the identification information CC for each of the paper feed cassettes 21. The definition menu MCC includes paper feed cassette name display boxes 31, paper feed cassette color selection boxes 32 (32a, 32b and 32c), color change buttons 33 (33a, 33b and 33c), an OK button 34, and a cancel button 35. The operator enters necessary information into the definition menu MCC in Step S2.

The paper feed cassette name display boxes 31 display the names of the paper feed cassettes 21 provided in the printing machine 2 and the types (sizes, materials and the like) of sheets 24 stored therein. In this preferred embodiment, the paper feed cassettes 21a, 21b and 21c are named #1, #2 and #3, respectively. The "name of paper feed cassette 21" in each of the paper feed cassette name display boxes 31 is displayed on the definition menu MCC by the information defining section 171 in accordance with the number of paper feed cassettes 21 provided in the printing machine 2. The information defining section 171 receives through the communication line CL information about the paper feed cassettes 21 managed by the control section 20 of the printing machine 2 (or the information about the number of paper feed cassettes 21 and the types of sheets 24 stored therein) to present the display of the paper feed cassette name display boxes 31 on the definition menu MCC in accordance with the received information. For definition of the identification information CC, it is sufficient to display only the "name of paper feed cassette 21" in each of the paper feed cassette name display boxes 31. In the printing system 100, however, the paper feed cassettes 21 are specified for the purpose of specifying the types of sheets 24 to be used. It is, therefore, preferable to configure the definition menu MCC so that displaying the "type of sheets 24" in each of the paper feed cassette name display boxes 31 allows the operator to define the identification information CC while knowing the type of sheets 24 corresponding to (or stored in) each of the paper feed cassettes 21, as illustrated in this preferred embodiment. Alternatively, the operator may individually input to the information defming section 171 the names and number of paper feed cassettes 21 provided in the printing machine 2 and the types of sheets 24 stored therein.

The paper feed cassette color selection boxes 32 and the color change buttons 33 are used to define color information as the identification information CC for each of the paper feed cassettes 21. The paper feed cassette color selection boxes 32a, 32b and 32c are paired with the color change buttons 33a, 33b and 33c, respectively.

The information defining section 171 displays on the definition menu MCC one paper feed cassette color selection box 32 and one color change button 33 for each of the paper feed cassettes 21 displayed in the paper feed cassette name display boxes 31. For example, the paper feed cassette color selection box 32a and the color change button 33a which constitute a pair correspond to the paper feed cassette 21a. When the operator manipulates the input section 13 to press any one of the color change buttons 33, the information defining section 171 displays information about a plurality of colors in the paper feed cassette color selection box 32 corresponding to the pressed color change button 33. Then, the operator further manipulates the input section 13 to select a desired color as the information for identification of the corresponding paper feed cassette 21 from the information about the plurality of colors displayed in the corresponding paper feed cassette color selection box 32. The operator repeats this operation for each of the paper feed cassettes 21, whereby the information defining section 171 defines the identification information CC for each paper feed cassette 21 so that the color information selected by the operator corresponds to each paper feed cassette 21.

The operator presses the OK button 34 when the input to the definition menu MCC is completed. If the operator completes the selection of the color information in each of the paper feed cassette color selection boxes 32 with satisfactory results, the operator manipulates the input section 13 to press the OK button 34. This causes the information defining section 171 to define the identification information CC using the inputs to the definition menu MCC to finish displaying the definition menu MCC.

The operator presses the cancel button 35 when the operator wants to interrupt displaying the definition menu MCC. This causes the information defining section 171 to finish displaying the definition menu MCC without waiting for the completion of the definition of the identification information CC.

Fig. 3B shows an example of the identification information CC. As described above, the identification information CC is defined for each of the paper feed cassettes 21 by the information defining section 171 as a result of input to the definition menu MCC. The identification information CC is shown in Fig. 3B as defined to contain the information shown in Fig. 3A by the operator pressing the color change buttons 33 corresponding to the paper feed cassette color selection boxes 32 shown on the definition menu MCC. In this preferred embodiment, the definitions of the identification information CC are as follows: "R (red)" for the paper feed cassette 21a (named "#1") having "A4 (A4-size) coated paper" stored therein; "G (green)" for the paper feed cassette 21b (named "#2") having "A4 plain paper" stored therein; and "B (blue)" for the paper feed cassette 21c (named "#3") having "A4 colored paper" stored therein. The identification information CC is temporarily stored in the memory 17.

Referring again to Fig. 2, the paper feed cassette specifying section 172 specifies a paper feed cassette 21 for the print data RPD to create the specification information CJ in Step S3. In Step S3, the operator manipulates the input section 13 of the controller 1 to do input to the paper feed cassette specifying section 172, whereby the specification information CJ is created. The specification information CJ indicates a correspondence between the print data RPD and the paper feed cassette 21 for feeding a sheet 24 on which the print data RPD is to be printed.

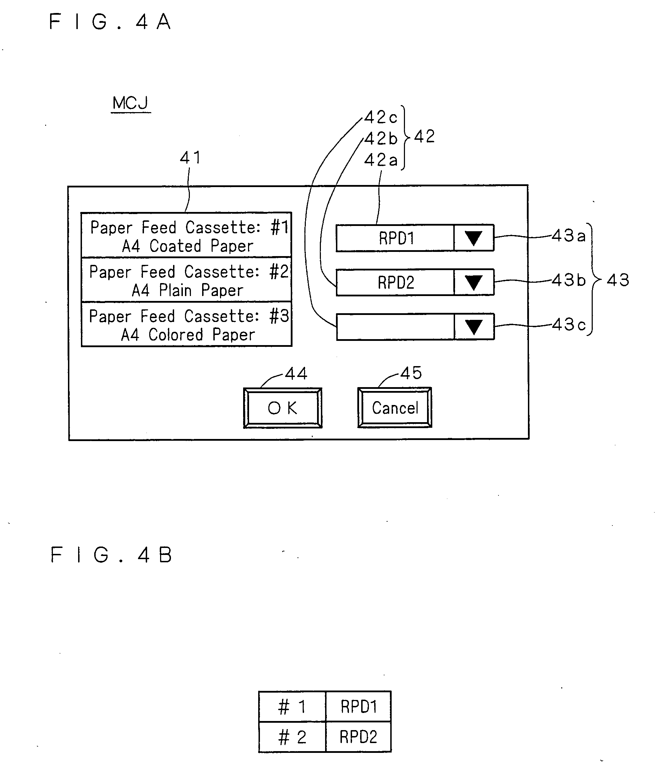

Fig. 4A shows a specification menu MCJ. The specification menu MCJ is displayed on the display section 12 by the paper feed cassette specifying section 172 for creation of the specification information CJ. To enable operator's input to specify the paper feed cassettes 21, the specification menu MCJ includes paper feed cassette name display boxes 41, print data selection boxes 42 (42a, 42b and 42c), print data change buttons 43 (43a, 43b and 43c), an OK button 44, and a cancel button 45. The paper feed cassette name display boxes 41 are similar to the paper feed cassette name display boxes 31 shown in Fig. 3A, and will not be described.

The print data selection boxes 42 and the print data change buttons 43 are used to specify the print data RPD as the specification information CJ for each of the paper feed cassettes 21. The print data selection boxes 42a, 42b and 42c are paired with the print data change buttons 43a, 43b and 43c, respectively. The paper feed cassette specifying section 172 displays on the specification menu MCJ one print data selection box 42 and one print data change button 43 for each of the paper feed cassettes 21 displayed in the paper feed cassette name display boxes 41. When the operator manipulates the input section 13 to press one of the displayed print data change buttons 43, the paper feed cassette specifying section 172 searches the storage section 16 to display a list of print data RPD stored in the storage section 16 in corresponding one of the print data selection boxes 42. The operator further manipulates the input section 13 to select desired print data RPD among the plurality of print data RPD displayed in the corresponding print data selection box 42. By repeating this operation, the paper feed cassette specifying section 172 creates the specification information CJ so that a sheet 24 stored for each paper feed cassette 21 is fed for printing of the selected print data RPD. For a single paper feed cassette 21, a plurality of print data RPD may be specified from the list of print data RPD displayed in the corresponding print data selection box 42. In this case, the plurality of print data RPD specified are printed on the same type of sheets 24. For a paper feed cassette 21 which is not to be used for printing such as the paper feed cassette 21c (named "#3"), the print data selection box 42c may be blank as shown in Fig. 4A without specifying the print data RPD.

The operator presses the OK button 44 when the input to the specification menu MCJ is completed. If the operator completes the selection of the print data RPD in each of the print data selection boxes 42 with satisfactory results, the operator manipulates the input section 13 to press the OK button 44. This causes the paper feed cassette specifying section 172 to define the specification information CJ using the inputs to the specification menu MCJ to finish displaying the specification menu MCJ.

The operator presses the cancel button 45 when the operator wants to interrupt displaying the specification menu MCJ. This causes the paper feed cassette specifying section 172 to finish displaying the specification menu MCJ without waiting for the completion of the creation of the specification information CJ. Although the specification menu MCJ in this preferred embodiment is configured so as to specify the print data RPD for each paper feed cassette 21, a paper feed cassette 21 may be specified for each print data RPD. In other words, the specification menu MCJ is required only to be configured so that the operator can specify the correspondences between the print data RPD and the paper feed cassettes 21.

Fig. 4B shows an example of the specification information CJ. As described above, the specification information CJ is created by the paper feed cassette specifying section 172 as a result of input to the specification menu MCJ. The specification information CJ is shown in Fig. 4B as created to contain the information shown in Fig. 4A by the operator pressing the print data change buttons 43 corresponding to the print data selection boxes 42 shown on the specification menu MCJ. In this preferred embodiment, the specified print data RPD are as follows: "RPD1" for the paper feed cassette 21a (named "#1"); and "RPD2" for the paper feed cassette 21b (named "#2"). This allows the printing machine 2 to do printing in a process to be described later by feeding a sheet 24 from the paper feed cassette 21a named "#1" when printing the print data RPD1 and by feeding a sheet 24 from the paper feed cassette 21b named "#2" when printing the print data RPD2. For the paper feed cassette 21c, no specification information CJ is created since no print data RPD is specified. The specification information CJ is temporarily stored in the memory 17.

Referring again to Fig. 2, the operator selects whether to use a slip sheet or not, in Step S4. The processing proceeds to Step S5 when the slip sheet is to be used for distinction between the plurality of printed sheets 25. The processing proceeds to Step S6 when no slip sheets are to be used.

In Step S5, the position specifying section 173 specifies the position in which a slip sheet is to be inserted, and the slip sheet feed cassette specifying section 174 specifies a paper feed cassette 21 for feeding the slip sheet.

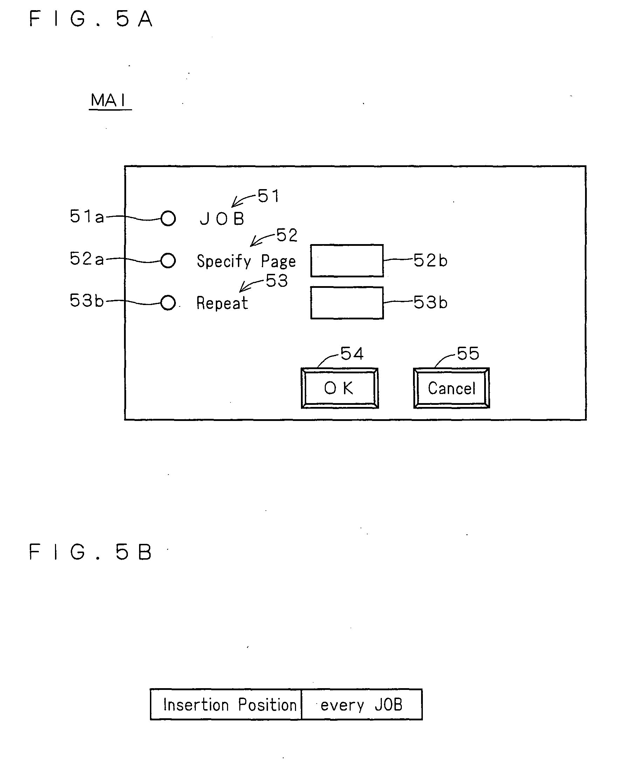

Fig. 5A shows a specification menu MAI. The specification menu MAI is displayed on the display section 12 by the position specifying section 173 for creation of the position information AI. The position information AI refers to information indicating the position in which a slip sheet is to be inserted between the printed sheets 25. The specification menu MAI includes a job-by-job specification area 51, a page specification area 52, a repetition specification area 53, an OK button 54, and a cancel button 55.

The job-by-job specification area 51 is used when a slip sheet is to be inserted each time the single print data RPD is printed while the process of printing the single print data RPD is regarded as one job. The operator manipulates the input section 13 to press a specification button 51a provided in the job-by-job specification area 51, whereby the position specifying section 173 creates the position information AI. The slip sheet insertion position is specified as the next position after a sheet 24 constituting the last page for each print data RPD.

The page specification area 52 is used when a slip sheet is to be inserted in a specific position between the printed sheets 25. The operator manipulates the input section 13 to press a specification button 52a provided in the page specification area 52, and to input into a specification box 52b a page number where the slip sheet is to be inserted. This causes the position specifying section 173 to create the position information AI so that the slip sheet is to be inserted at the page number inputted to the specification box 52b. The slip sheet insertion position is specified as the next position after a sheet 24 constituting a page immediately preceding a page having the page number inputted to the specification box 52b.

The repetition specification area 53 is used when a slip sheet is to be inserted after every specific number of pages of the printed sheets 25. The operator manipulates the input section 13 to press a specification button 53a provided in the repetition specification area 53, and to input the number of pages into a specification box 53b. This causes the position specifying section 173 to create the position information AI so that the slip sheet is to be inserted after every number of pages inputted to the specification box 53b. The slip sheet insertion position is specified as the next position after a sheet 24 constituting the last page each time sheets 24 corresponding to the number of pages inputted to the specification box 53b are printed.

The operator presses the OK button 54 when the input to the specification menu MAI is completed. When the operator manipulates the input section 13 to press the OK button 54, the position specifying section 173 creates the position information AI using the inputs to the specification menu MAI to finish displaying the specification menu MAI.

The operator presses the cancel button 55 when the operator interrupts displaying the specification menu MAI. When the operator presses the cancel button 55, the position specifying section 173 finishes displaying the specification menu MAI without creating the position information AI.

Fig. 5B shows an example of the position information AI. The position information AI is shown in Fig. 5B as obtained when the operator presses the specification button 51a on the specification menu MAI. As shown in Fig. 5B, the created position information AI indicates that a slip sheet is to be inserted each time the print data RPD is printed on the single sheet 24. The created position information AI is temporarily stored in the memory 17.

In Step S5, the slip sheet feed cassette specifying section 174 displays a specification menu MAJ on the display section 12 for specification of a paper feed cassette 21 for feeding the slip sheet.

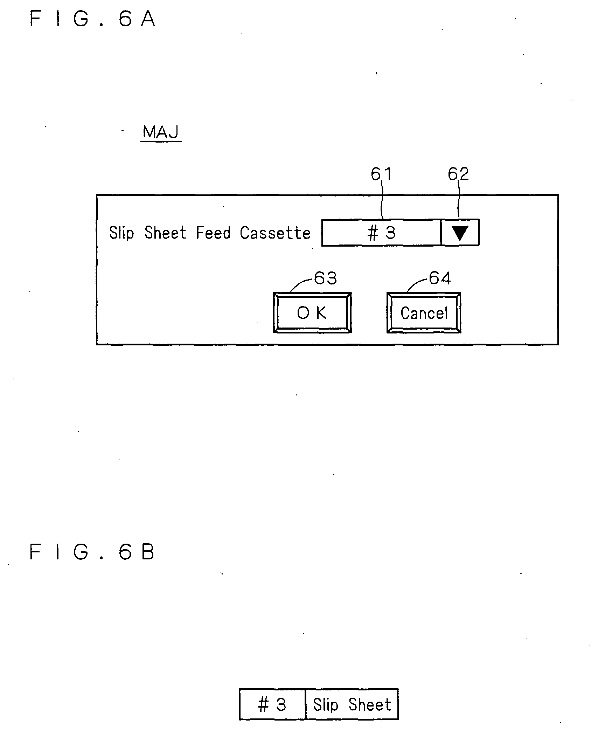

Fig. 6A shows the specification menu MAJ. The specification menu MAJ is displayed for creation of the specification information AJ. The specification menu MAJ includes a selection box 61, a change button 62, an OK button 63, and a cancel button 64. The specification information AJ refers to information indicating the paper feed cassette 21 for feeding the slip sheet.

The selection box 61 and the change button 62 are used to specify the paper feed cassette 21 for feeding the slip sheet. The selection box 61 is paired with the change button 62. When the operator manipulates the input section 13 to press the change button 62, the slip sheet feed cassette specifying section 174 displays a list of the paper feed cassettes 21 provided in the printing machine 2 in the selection box 61. The operator further manipulates the input section 13 to select a desired paper feed cassette 21 among the plurality of paper feed cassettes 21a, 21b and 21c displayed in the selection box 61. The slip sheet feed cassette specifying section 174 creates the specification information AJ indicating the paper feed cassette 21 thus selected.

The operator presses the OK button 63 after the input to the specification menu MCJ is completed. When the operator manipulates the input section 13 to press the OK button 63, the slip sheet feed cassette specifying section 174 creates the specification information AJ using the inputs to the specification menu MAJ to finish displaying the specification menu MAJ.

The operator presses the cancel button 64 when the operator interrupts displaying the specification menu MAJ. When the operator presses the cancel button 64, the slip sheet feed cassette specifying section 174 finishes displaying the specification menu MAJ without creating the specification information AJ.

Fig. 6B shows an example of the specification information AJ. The specification information AJ is shown in Fig. 6B as obtained when the operator do input to the selection box 61 and the change button 62 on the specification menu MAJ so as to specify the paper feed cassette 21c (named "#3") as the paper feed cassette 21 for feeding the slip sheet. The created specification information AJ is temporarily stored in the memory 17.

Although the printing system 100 operates in the sequence of Steps S1 to S5 in the above description, the sequence of operations of the printing system 100 is not limited to this sequence. For example, the operations in Steps S4 and S5 may be carried out prior to the operations in Steps S1 to S3. The sequence of operations in Steps S2 and S3 may be altered.

The definition menu MCC and the specification menus MCJ, MAI, MAJ are separately displayed in the above description. However, these menus may be displayed at the same time on the display section 12. Alternatively, a definition menu into which the above-mentioned menus are integrated may be displayed on the display section 12.

Referring again to Fig. 2, the controller 1 of the printing system 100 presents a preview display of the print data RPD on the display section 12 in Step S6.

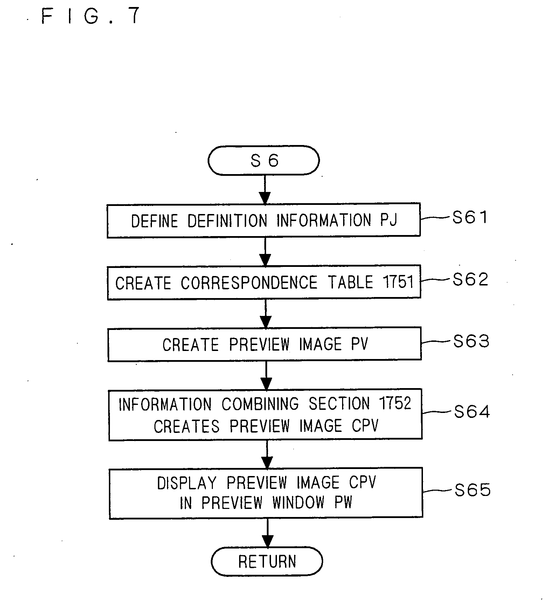

Fig. 7 is a flowchart for illustrating the operation of the controller 1 of the printing system 100 in Step S6 in detail. First, the image creating section 175 creates definition information PJ regarding a preview display of the print data RPD in Step S61.

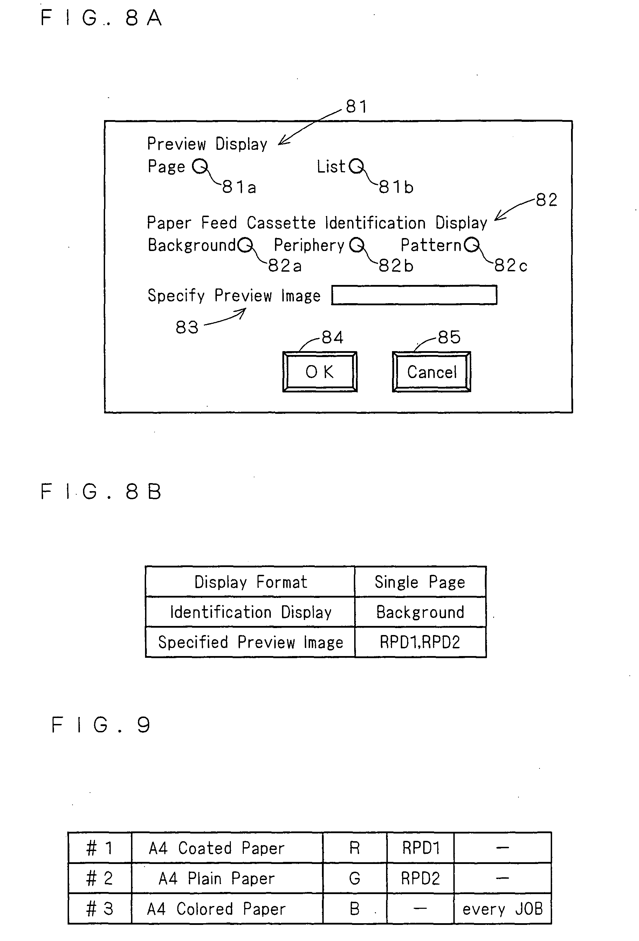

Fig. 8A shows a definition menu MPJ. The operator manipulates the input section 13 to do input to the definition menu MPJ, whereby the image creating section 175 creates the definition information PJ. To this end, the definition menu MPJ includes a display format definition area 81, an identification display definition area 82, an image specification area 83, an OK button 84, and a cancel button 85.

The display format definition area 81 is intended for defining the display format of the preview image PV to be displayed in the preview window PW. Specifically, the display format definition area 81 is used to define whether to display a preview image PV in the form of a single page or a plurality of preview images PV in list form in the preview window PW. Therefore, the display format definition area 81 includes a single page specification button 81a and a list specification button 81b. For display of the preview image PV in the form of a single page in the preview window PW, the operator manipulates the input section 13 to press the single page specification button 81a. For display of the plurality of preview images PV in list form, on the other hand, the operator presses the list specification button 81b. It should be noted that the single page specification button 81a and the list specification button 81b are pressed in mutually exclusive manner, and are not permitted to be pressed at the same time. Additionally, the printing system 100 in this preferred embodiment does not directly display the preview image PV but displays the preview image CPV obtained by the image combination of the identification information CC and the preview image PV.

The identification display definition area 82 is intended for defining the display format of the identification information CC to be displayed in combination with the preview image PV. The identification display definition area 82 includes a background display button 82a, a periphery display button 82b, and a pattern display button 82c.

The operator presses the background display button 82a when displaying the preview image PV in combination with the identification information CC as the background of the preview image PV in the preview window PW.

The operator presses the periphery display button 82b when displaying the preview image PV in combination with the identification information CC as the peripheral portion of the preview image PV in the preview window PW.

The operator presses the pattern display button 82c when displaying the preview image PV in combination with the identification information CC as the pattern of the preview image PV in the preview window PW.

It should be noted that the background display button 82a, the periphery display button 82b and the pattern display button 82c are pressed in mutually exclusive manner, and are not permitted to be pressed at the same time.

The image specification area 83 is used when the operator specifies the print data RPD to be displayed as the preview image PV in the preview window PW. The operator specifies the print data RPD to be displayed in the preview window PW by inputting the name or page number of desired print data RPD to the image specification area 83. A plurality of print data RPD may be specified in the image specification area 83.

The operator presses the OK button 84 after the input to the definition menu MPJ is completed. When the operator manipulates the input section 13 to press the OK button 84, the image creating section 175 creates the definition information PJ using the inputs to the definition menu MPJ to finish displaying the definition menu MPJ.

The operator presses the cancel button 85 when the operator interrupts displaying the definition menu MPJ. When the operator presses the cancel button 85, the image creating section 175 finishes displaying the definition menu MPJ without creating the definition information PJ.

Fig. 8B shows an example of the definition information PJ. As described above, the definition information PJ is created by the image creating section 175 as a result of input to the definition menu MPJ. The definition information PJ is shown in Fig. 8B as created by the image creating section 175 when the operator presses the single page specification button 81a and the background display button 82a and inputs "RPD1" and "RPD2" to the image specification area 83 on the definition menu MPJ.

Referring again to Fig. 7, the image creating section 175 acquires and stores in the correspondence table 1751 the identification information CC, the specification information CJ, the position information AI and the specification information AJ temporarily stored in the memory 17 in Step S62.

Fig. 9 shows an example of the correspondence table 1751. The correspondence table 1751 is shown in Fig. 9 as created by the image creating section 175, based on the identification information CC, the specification information CJ, the position information AI and the specification information AJ shown in Figs. 3B, 4B, 5B and 6B.

As shown in Fig. 9, the paper feed cassette 21a (named "#1" in Fig. 9) having stored therein the sheets 24 whose type is "A4 coated paper" is related to the identification information CC indicating "R (red)." Based on the specification information CJ, the correspondence table 1751 indicates that the sheet 24 is to be fed from the paper feed cassette 21a when printing the print data RPD1. From the specification information AJ, it is found that the paper feed cassette 21a is selected to print the print data RPD but is not selected as the paper feed cassette 21 for feeding the slip sheet. The position information AI is not related to the paper feed cassette 21a.

Similarly, the paper feed cassette 21b (named "#2" in Fig. 9) is related to the identification information CC indicating "G (green)" and is selected to feed the sheet 24 for printing the print data "RPD2." Information relating to the slip sheet is not related to the paper feed cassette 21b.

On the other hand, the paper feed cassette 21c (named "#3" in Fig. 9) having stored therein the sheets 24 whose type is "A4 colored paper" is related to the identification information CC indicating "B (blue)," but is not related to the print data RPD indicated by the specification information CJ. However, the correspondence between the slip sheet insertion position "every job" indicated by the position information AI and "#3" indicated by the specification information AJ shows that the paper feed cassette 21c is selected to feed the slip sheet.

Referring again to Fig. 7, the image creating section 175 creates a preview image CPV in Step S63, based on the definition information PJ created in Step S61 and the correspondence table 1751 created in Step S62.

The image creating section 175 first references the definition information PJ to identify the print data RPD to be displayed as the preview image PV, thereby acquiring the identified print data RPD from the storage section 16. Then, the image creating section 175 identifies the paper feed cassette 21 corresponding to the acquired print data RPD from the correspondence table 1751 to acquire the size of a display area PE from the information relating to the identified paper feed cassette 21. The image creating section 175 creates the preview image PV having the size of the display area PE from the acquired print data RPD.

The operation of the image creating section 175 in Step S63 will be described using a specific example shown in Figs. 8B and 9. The image creating section 175 references the definition information PJ to identify the print data RPD1 specified as the print data RPD to be preview-displayed, thereby acquiring the print data RPD1 from the storage section 16. Then, the image creating section 175 references the correspondence table 1751 to acquire information relating to the paper feed cassette 21 corresponding to the acquired print data RPD1 (or the paper feed cassette 21 having stored therein the sheets 24 for printing the print data RPD1 thereon). As shown in Fig. 9, the paper feed cassette 21a (named "#1") is related to the print data RPD1, and "A4 coated paper" is stored as the information relating to the paper feed cassette 21a. Thus, the image creating section 175 acquires "A4" as the size of the display area PE in which the preview image PV (referred to hereinafter as a "preview image PV1") of the print data RPD 1 is to be displayed. Then, the image creating section 175 calculates the scale factor of the original image represented by the print data RPD1 for the size "A4" of the display area PE, to create the preview image PV by skipping or reducing pixel data constituting the print data RPD1 so as to satisfy the calculated scale factor. Since the definition information PJ shown in Fig. 9 also specifies the print data RPD2 as the print data RPD to be preview-displayed, the image creating section 175 repeatedly performs a similar operation on the print data RPD2 to create another preview image PV.

In the printing system 100 according to this preferred embodiment, the controller 1 previously brings the information about each paper feed cassette 21 received from the printing machine 2 into correspondence with the identification information CC to store the correspondence therebetween in the correspondence table 1751, when defining the identification information CC. However, the controller 1 may receive the information about each paper feed cassette 21 from the printing machine 2 when acquiring the size of the display area PE.

After the creation of the preview images PV, the information combining section 1752 of the image creating section 175 references the correspondence table 1751 and the definition information PJ to create a preview image CPV for each preview image PV in Step S64. The information combining section 1752 creates the preview image CPV by combining the identification information CC with the preview image PV created in Step S63. In this step, the information combining section 1752 references the identification display (or the display format of the identification information CC) defined in the definition information PJ to determine how to combine the identification information CC with the preview image PV.

When the identification display is defined as "background" in the definition information PJ as shown in Fig. 8B, the information combining section 1752 references the correspondence table 1751 to create a background image BV based on the identification information CC defined for the paper feed cassette 21 for use in printing of the print data RPD. The display size of the background image BV is required only to be greater than the size of the display area PE determined from the size of the sheets 24 stored in the paper feed cassette 21. The information combining section 1752 overlays the preview image PV upon the background image BV to create the preview image CPV. The preview image CPV containing the identification information CC in the form of the "background" is referred to hereinafter as a "preview image BCPV."

When the identification display is defined as "periphery" in the definition information PJ, the information combining section 1752 references the correspondence table 1751 to create a periphery image SV based on the identification information CC defined for the paper feed cassette 21 for use in printing of the print data RPD. The display size of the periphery image SV is made equal to the size of the display area PE determined from the size of the sheets 24 stored in the paper feed cassette 21. It is desirable that the width of a frame constituting the periphery image SV is defined as an initial condition in the information combining section 1752. Alternatively, the operator may additionally define the width of the frame of the periphery image SV. The information combining section 1752 overlays the periphery image SV upon the preview image PV to create the preview image CPV. The preview image CPV containing the identification information CC in the form of the "periphery" is referred to hereinafter as a "preview image SCPV."

When the identification display is defined as "pattern" in the definition information PJ, the information combining section 1752 references the correspondence table 1751 to create a pattern image DV based on the identification information CC defined for the paper feed cassette 21 for use in printing of the print data RPD. The display size of the pattern image DV is made equal to the size of the display area PE determined from the size of the sheets 24 stored in the paper feed cassette 21. The information combining section 1752 combines the pattern image DV with the preview image PV by "ORing" the images DV and PV, to create the preview image CPV. The preview image CPV containing the identification information CC in the form of the "pattern" is referred to hereinafter as a "preview image DCPV."

On the other hand, when a slip sheet is to be used, no preview image PV corresponding to the slip sheet is created in Step S63. Thus, only the size of the display area PE is acquired from the information about the paper feed cassette 21 for feeding the slip sheet in Step S63. Then, in Step S64, the information combining section 1752 creates one of the background image BV, the periphery image SV and the pattern image DV from the identification information CC indicating the paper feed cassette 21 for feeding the slip sheet to create the preview image CPV in accordance with the size of the acquired display area PE. The preview image CPV thus created for a slip sheet is referred to hereinafter as a "preview image ACPV."

Next, in Step S65, the image display section 176 displays the preview window PW on the display section 12, and displays the preview image CPV created in Step S64 within the preview window PW. In this step, the image display section 176 references the definition information PJ to display the preview image CPV in a format specified as the display format of the preview image PV. In this preferred embodiment, either "single page" or "list" is selectable as the display format of the preview image PV.

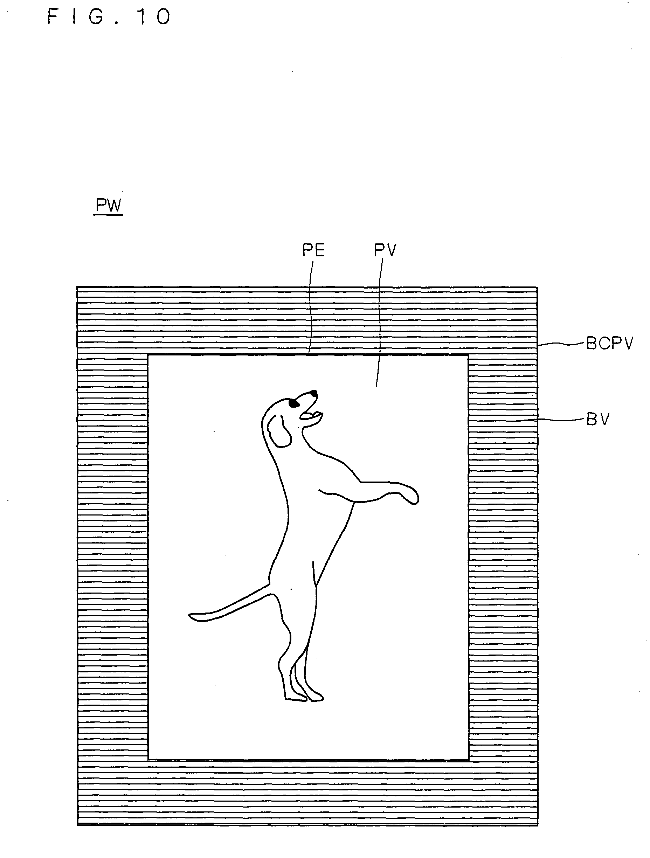

Figs. 10 through 12 show preview images CPV displayed in the "single page"-format within the preview window PW. When any one of the preview images CPV shown in Figs. 10 through 12 is displayed on the display section 12, the operator can check whether or not the print data RPD to be printed is proper and whether or not the position and size of the print data RPD to be printed are proper relative to the sheet 24, based on the original image represented in the preview image PV and the position and size of the preview image PV relative to the display area PE, as in the case of the conventional preview display.

Fig. 10 shows an example of the preview image BCPV being displayed. The display area PE indicating the size of the sheet 24 is represented by the inner frame. The preview image BCPV is greater in size than the display area PE, and only the original image represented by the print data RPD is presented within the display area PE. For the preview image BCPV, the background image BV indicating the identification information CC is used as the background of the preview image PV (or the display area PE). The preview image BCPV is similar to an image such that the sheet 24 indicated by the display area PE is attached to a panel on which the background image BV is painted. Thus, the operator views the background image BV to thereby recognize which paper feed cassette 21 is to be used for printing of the original image (represented by the print data RPD) presented within the display area PE. In this preferred embodiment, since the identification information CC is information relating to "color," the operator recognizes the color of the background image BV to recognize the paper feed cassette 21 to be used. As an example, when the identification information CC is defined as shown in Fig. 3B, the background image BV displayed in "R (red)" allows the operator to recognize that the paper feed cassette 21a (named "#1") is to be used for printing of the print data RPD and that the original image represented by the print data RPD is to be printed on the sheet 24 stored in the paper feed cassette 21a. The display area PE indicated in the preview image BCPV is similar to the conventional preview image, and is effective if the operator is accustomed to the conventional preview image.

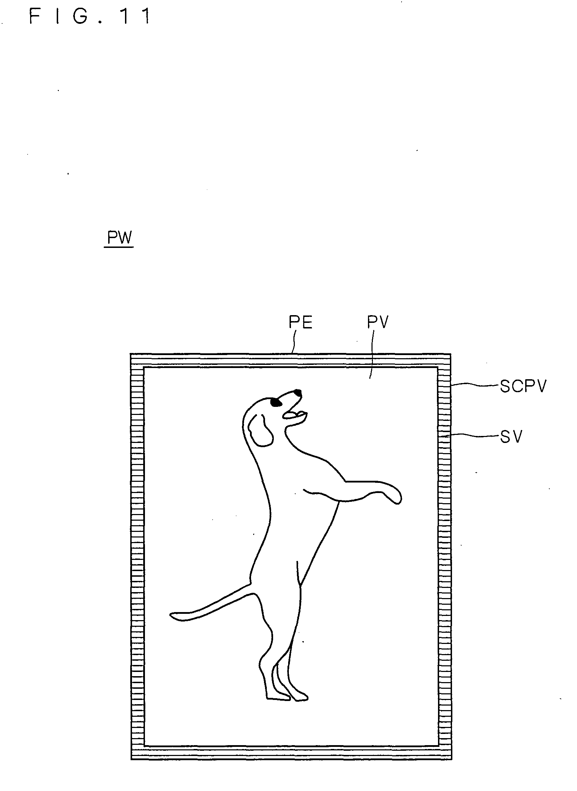

Fig. 11 shows an example of the preview image SCPV being displayed. The preview image SCPV is equal in size to the display area PE, and contains the periphery image SV in its peripheral portion. In the preview image SCPV, a portion of the image presented within the display area PE which corresponds to the periphery image SV is not to be actually printed on the sheet 24. The operator views the periphery image SV to thereby recognize which paper feed cassette 21 is to be used for printing of the original image (represented by the print data RPD) shown in Fig. 11. As an example, when the identification information CC is defined as shown in Fig. 3B, the periphery image SV displayed in "R (red)" allows the operator to recognize that the paper feed cassette 21 a (named "#1") is to be used for printing of the print data RPD and that the original image represented by the print data RPD is to be printed on the sheet 24 stored in the paper feed cassette 21a. The preview image SCPV, which is equal in size to the display area PE and smaller in size than the preview image BCPV, is efficiently displayed in the display area of the preview window PW. The width of the periphery image SV may be previously set arbitrarily as mentioned above, but is preferably set in consideration for the margin established in the printing section 22.

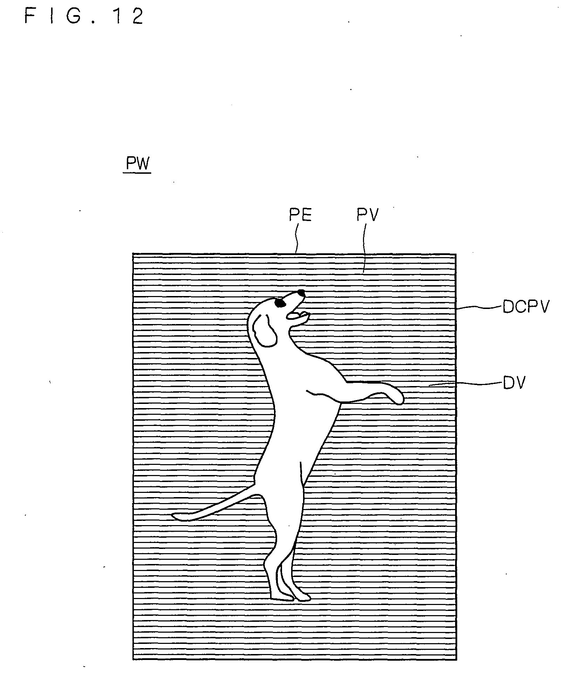

Fig. 12 shows an example of the preview image DCPV being displayed. The preview image DCPV is equal in size to the display area PE, and contains the pattern image DV indicated by the identification information CC and used as the pattern of the preview image PV. In the preview image DCPV, a portion of an image (which is an combination of the preview image PV and the pattern image DV) presented within the display area PE which corresponds to the pattern image DV is not to be actually printed on the sheet 24. The operator views the pattern image DV to thereby recognize which paper feed cassette 21 is to be used for printing of the original image (represented by the print data RPD) shown in Fig. 12. As an example, when the identification information CC is defined as shown in Fig. 3B, the pattern image DV displayed in "R (red)" allows the operator to recognize that the paper feed cassette 21a (named "#1") is to be used for printing of the print data RPD and that the original image represented by the print data RPD is to be printed on the sheet 24 stored in the paper feed cassette 21a. The preview image DCPV, which is equal in size to the display area PE and smaller in size than the preview image BCPV, is efficiently displayed in the display area of the preview window PW.

As described above, the controller 1 of the printing system 100 presents the preview display of the preview image CPV by using the identification information CC defined for the paper feed cassette 21 which feeds the sheet 24 for printing of the print data RPD thereon, thereby to allow the operator to easily grasp the correspondence between the print data RPD and the paper feed cassette 21.

When the display format of the preview image PV is defined as "list" in the definition information PJ, the image creating section 175 repeatedly performs the operation in Steps S63 and S64 upon the plurality of print data RPD defined as the print data RPD to be preview-displayed in the definition information PJ, to create a plurality of preview images CPV. Then, the list display section 1761 of the image display section 176 scales down the plurality of preview images CPV so that the plurality of preview images CPV are placed within the preview window PW. The image display section 176 displays the plurality of scaled-down preview images CPV on the display section 12.

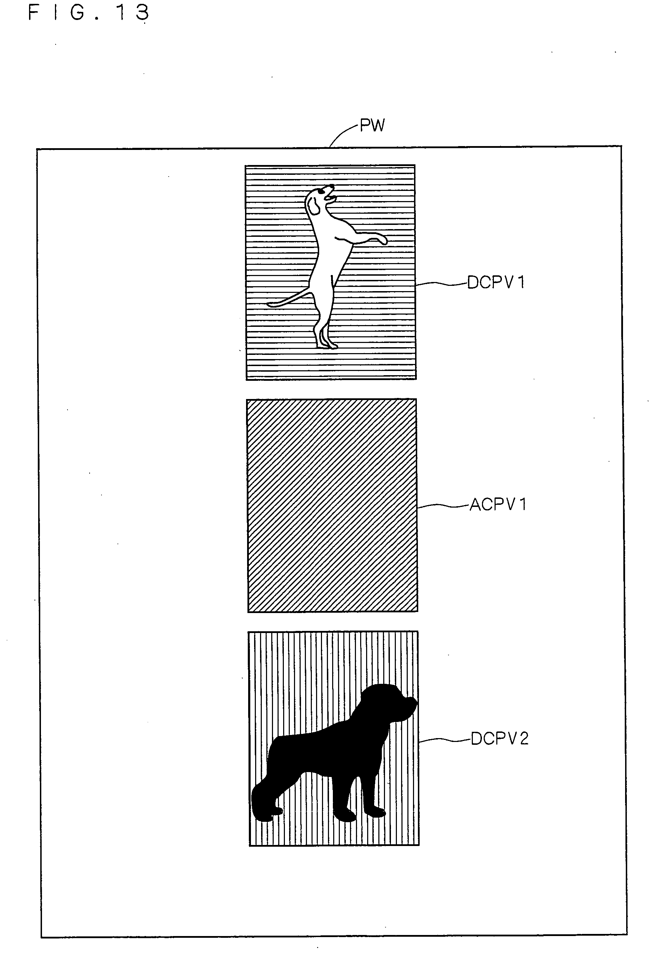

Fig. 13 is an example of the preview images CPV being displayed in list form. The example shown in Fig. 13 is obtained when the definition information PJ specifies the print data RPD1 and RPD2 and defines the preview image display format as "list" and the identification display as "pattern," and the correspondence table 1751 stores the information shown in Fig. 9.

A preview image DCPV1 created from the print data RPD1 and the identification information CC corresponding to the print data RPD1 is displayed within the preview window PW. In this case, the correspondence table 1751 specifies that the sheet 24 is to be fed from the paper feed cassette 21a for printing of the print data RPD 1. The identification information CC about the paper feed cassette 21a is defined as "R (red)." Thus, the pattern image DV for the preview image DCPV1 is displayed in "R (red). "

Since the slip sheet insertion position is defined as "every job," a slip sheet is to be inserted after the printing of the print data RPD1. Thus, the preview image ACPV is displayed in the next position after the preview image DCPV1. In this case, the correspondence table 1751 specifies that the sheet 24 is to be fed from the paper feed cassette 21c for insertion of the slip sheet. The identification information CC about the paper feed cassette 21c is defined as "B (blue)." Thus, the pattern image DV for the preview image ACPV is displayed in "B (blue)."

A preview image DCPV2 created from the print data RPD2 and the identification information CC corresponding to the print data RPD2 is displayed in the next position after the preview image ACPV. In this case, the correspondence table 1751 specifies that the sheet 24 is to be fed from the paper feed cassette 21b for printing of the print data RPD2. The identification information CC about the paper feed cassette 21b is defined as "G (green)." Thus, the pattern image DV for the preview image DCPV2 is displayed in "G (green)."

Displaying the plurality of preview images CPV in list form within the preview window PW in this manner allows the operator to easily recognize which paper feed cassette 21 is to feed the sheet 24 for printing of which print data RPD, when printing is to be performed based on the plurality of print data RPD.

Displaying the preview image ACPV allows the operator to recognize that the slip sheet is to be used and which paper feed cassette 21 is to feed the slip sheet. In other words, the operator can easily recognize which type of sheet 24 is to be used as the slip sheet.

Displaying the preview image ACPV between the preview images DCPV1 and DCPV2 allows the operator to recognize that the slip sheet is to be inserted between the printing of the print data RPD1 and the printing of the print data RPD2. In other words, the operator can easily recognize the slip sheet insertion position.

After the preview display is presented, the processing proceeds to Step S7 of Fig. 2. In Step S7, the operator judges whether or not the correspondences between the print data RPD and the paper feed cassettes 21 attain a satisfactory result. If the operator is not satisfied with the correspondences between the print data RPD and the paper feed cassettes 21 as a result of the preview display, the processing returns to Step S3 to repeat the above-mentioned processes. If the operator is satisfied with the correspondences between the print data RPD and the paper feed cassettes 21, the processing proceeds to Step S8.

In Step S8, when the operator inputs a command to start printing the print data RPD, the printing machine 2 carries out the printing of the print data RPD based on the specification information CJ. The printing machine 2 receives the control signal ACD sent from the controller 1, whereby the control section 20 feeds the slip sheet.

As described above, the printing system 100 shown in Fig. 1 performs the operation shown in the flowcharts of Figs. 2 and 6 to allow the operator who views the preview window PW to recognize on which type of sheet 24 the original image represented by the print data RPD is to be printed. This allows the operator to recognize whether or not a desired original image is to be reliably printed on a desired type of sheet prior to the printing process, to thereby produce the effect of solving the background art problems.

Although the identification information CC is defined for each of the paper feed cassettes 21 in the above description, the identification information CC may be defined only for a specific paper feed cassette 21.

If the identification information CC is defined, for example, only for the paper feed cassette 21c for feeding the slip sheet, the preview display of only the preview image ACPV for the slip sheet is provided based on the identification information CC. This allows the operator to recognize, in particular, only the paper feed cassette 21 for feeding the slip sheet. This produces the effect of facilitating the judgment about the feed of the slip sheet.

Although information about color is defined as the identification information CC in the above description, information about the number or name of each paper feed cassette 21 or about the type of sheets 24 stored in each paper feed cassette 21 may be used as the identification information CC. In other words, any information which allows the operator to identify the paper feed cassettes 21 may be used as the identification information CC.

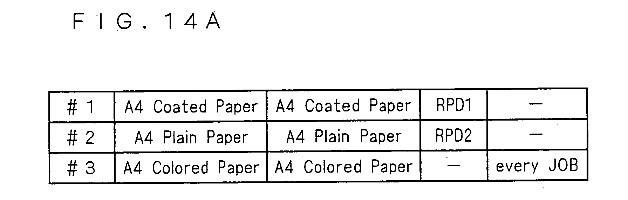

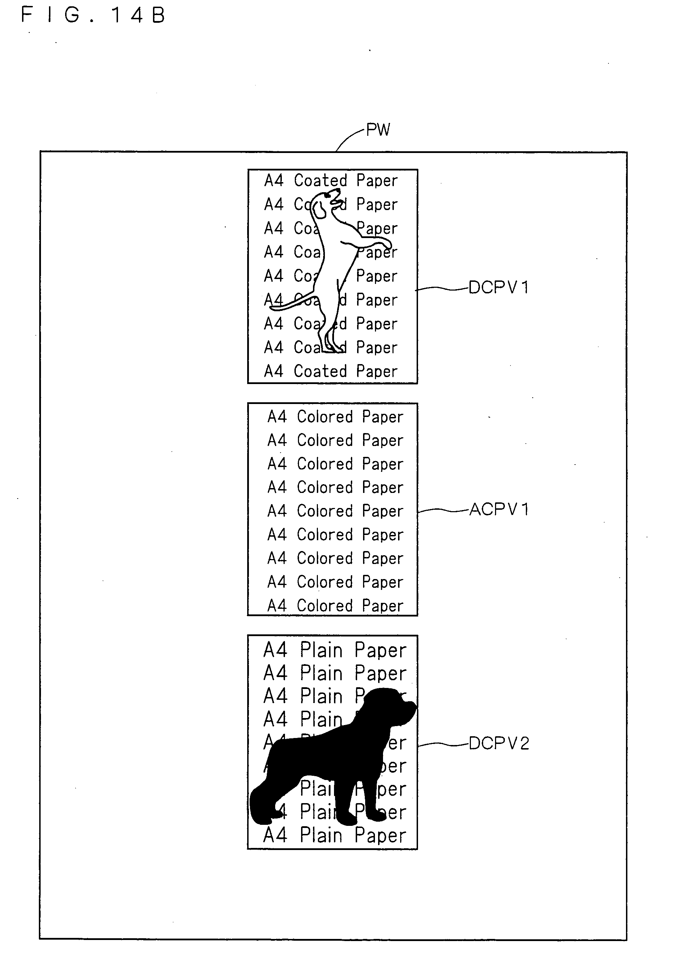

Fig. 14A shows an example of the correspondence table 1751 when information about the type of sheets 24 stored in each of the paper feed cassettes 21 is used as the identification information CC. Fig. 14B shows an example of the preview images DCPV displayed in list form, based on the correspondence table 1751 shown in Fig. 14A. Displaying the preview images CPV as shown in Fig. 14B allows the operator to identify the type of sheet 24 on which each of the print data RPD is to be printed at a glance. This produces the effect of allowing the operator to more easily recognize whether or not a desired original image is to be reliably printed on a desired type of sheet. In such a modification, the display format of the identification information CC for the preview images CPV may, of course, be the "background" or the "periphery."

In the above description, the preview image CPV is created by combining the background image BV, periphery image SV or pattern image DV created from the identification information CC with the preview image PV. However, other techniques may be used to create a preview image CPV.

As an example, the image creating section 175 may further write the background image BV, the periphery image SV or the pattern image DV into the display area PE obtained from the size of the sheet 24, and thereafter performs a pixel skipping or scale-down process on the original image represented by the print data RPD, thereby to create the preview image PV. Such a technique for combination also creates a preview image CPV similar to that described above.

In the description hereinabove, it is assumed that the print data RPD is to be printed on the single sheet 24. The present invention, however, is applicable to the printing of the single print data RPD on a plurality of sheets 24 or the printing of a plurality of print data RPD on a plurality of sheets 24, respectively, in the printing system 100.

Additionally, the printing machine 2 includes the three paper feed cassettes 21 in the above description. However, the present invention is applicable to the printing machine 2 including two paper feed cassettes 21 or at least four paper feed cassettes 21.

Further, the printing of the print data RPD on the sheet 24 is described hereinabove as single-sided printing. However, the present invention is applicable to double-sided printing for printing two print data RPD on opposite sides of the single sheet 24.

While the invention has been described in detail, the foregoing description is in all aspects illustrative and not restrictive. It is understood that numerous other modifications and variations can be devised without departing from the scope of the invention.

## Claims

1. A printing system comprising:
(a) a printing machine having a plurality of paper feed sections, said printing machine using a sheet stored in any one of said plurality of paper feed sections; and
(b) a controller for providing print data to said printing machine, said controller including
(b-1) an information defining element for defining identification information for identifying said plurality of paper feed sections,
(b-2) a paper feed section specifying element for specifying one of said plurality of paper feed sections for feeding said sheet for printing of an image represented by said print data on said sheet,
(b-3) an image creating element for creating a preview image, based on said image represented by said print data, and said identification information defined by said information defining element for the paper feed section specified by said paper feed section specifying element, and
(b-4) a display element for displaying said preview image created by said image creating element.

2. The printing system according to claim 1, wherein
said controller further includes
(b-5) a position specifying element for specifying a position in which a slip sheet is to be inserted between printed sheets, and
(b-6) a slip sheet feed section specifying element for specifying one of said plurality of paper feed sections for feeding a sheet to be used as said slip sheet; and
said image creating element creates said preview image, based on said position in which said slip sheet is to be inserted which is specified by said position specifying element, and said identification information defined by said information defining element for the paper feed section specified by said slip sheet feed section specifying element.

3. The printing system according to claim 1, wherein
said image creating element creates said preview image by using said identification information defined by said information defining element for said paper feed section specified by said paper feed section specifying element as a background of said preview image.

4. The printing system according to claim 1, wherein
said image creating element creates said preview image by using said identification information defined by said information defining element for said paper feed section specified by said paper feed section specifying element as a periphery of said preview image.

5. The printing system according to claim 1, wherein
said image creating element creates said preview image by using said identification information defined by said information defining element for said paper feed section specified by said paper feed section specifying element as a pattern of said preview image.

6. The printing system according to claim 1, wherein
said display element displays a plurality of preview images created by said image creating element in list form.

7. A controller for providing print data to a printing machine, said controller comprising:
(a) an information defining element for defining identification information for identifying a plurality of paper feed sections provided in said printing machine;
(b) a paper feed section specifying element for specifying one of said plurality of paper feed sections for feeding a sheet for printing of an image represented by said print data on said sheet;
(c) an image creating element for creating a preview image, based on said image represented by said print data, and said identification information defined by said information defining element for the paper feed section specified by said paper feed section specifying element; and
(d) a display element for displaying said preview image created by said image creating element.

8. The controller according to claim 7, further comprising:
(e) a position specifying element for specifying a position in which a slip sheet is to be inserted between printed sheets; and
(f) a slip sheet feed section specifying element for specifying one of said plurality of paper feed sections for feeding a sheet to be used as said slip sheet,
wherein said image creating element creates said preview image, based on said position in which said slip sheet is to be inserted which is specified by said position specifying element, and said identification information defined by said information defining element for the paper feed section specified by said slip sheet feed section specifying element.

9. A method of displaying an image represented by print data, said method comprising the steps of:
(a) defining identification information for identifying a plurality of paper feed sections provided in a printing machine;
(b) specifying one of said plurality of paper feed sections for feeding a sheet for printing of said image represented by said print data on said sheet;
(c) creating a preview image, based on said image represented by said print data, and said identification information defined in said step (a) for the paper feed section specified in said step (b); and
(d) displaying said preview image created in said step (c).

10. The method according to claim 9, further comprising the steps of:
(e) specifying a position in which a slip sheet is to be inserted between printed sheets; and
(f) specifying one of said plurality of paper feed sections for feeding a sheet to be used as said slip sheet,
wherein said step (c) includes creating said preview image, based on said position in which said slip sheet is to be inserted which is specified in said step (e), and said identification information defined in said step (a) for the paper feed section specified in said step (f).

11. A recording medium having recorded thereon a program readable by a computer, said program causing said computer to execute the steps of:
(a) defining identification information for identifying a plurality of paper feed sections provided in a printing machine;
(b) specifying one of said plurality of paper feed sections for feeding a sheet for printing of an image represented by print data on said sheet;
(c) creating a preview image, based on said image represented by said print data, and said identification information defined in said step (a) for the paper feed section specified in said step (b); and
(d) displaying said preview image created in said step (c).

12. The recording medium according to claim 11, wherein
said program causes said computer to further execute the steps of
(e) specifying a position in which a slip sheet is to be inserted between printed sheets, and
(f) specifying one of said plurality of paper feed sections for feeding a sheet to be used as said slip sheet; and
said step (c) includes creating said preview image, based on said position in which said slip sheet is to be inserted which is specified in said step (e), and said identification information defined in said step (a) for the paper feed section specified in said step (f).

13. A program product including a program readable by a computer, said program causing said computer to execute the steps of:
(a) defining identification information for identifying a plurality of paper feed sections provided in a printing machine;
(b) specifying one of said plurality of paper feed sections for feeding a sheet for printing of an image represented by print data on said sheet;
(c) creating a preview image, based on said image represented by said print data, and said identification information defined in said step (a) for the paper feed section specified in said step (b); and
(d) displaying said preview image created in said step (c).

14. The program product according to claim 13, wherein
said program causes said computer to further execute the steps of
(e) specifying a position in which a slip sheet is to be inserted between printed sheets, and
(f) specifying one of said plurality of paper feed sections for feeding a sheet to be used as said slip sheet; and
said step (c) includes creating said preview image, based on said position in which said slip sheet is to be inserted which is specified in said step (e), and said identification information defined in said step (a) for the paper feed section specified in said step (f).
